# EUROPÄISCHE PATENTSCHRIFT

(11) **EP 2 527 642 B1**
(45) Veröffentlichungstag und Bekanntmachung des Hinweises auf die Patenterteilung: **01.07.2015**
(21) Anmeldenummer: 12168992.1
(22) Anmeldetag: 23.05.2012
(51) Int. Cl.: F03D 1/06

(54) **Rotorblatt einer Windenergieanlage und entsprechendes Verfahren**
Rotor blade of a wind turbine and corresponding method
Pale de rotor d'une éolienne et procédé correspondant

(30) Priorität: 26.05.2011 DE 102011050661
(43) Veröffentlichungstag der Anmeldung: 28.11.2012
(73) Patentinhaber: BayWa r.e. Rotor Service GmbH, 27432 Basdahl (DE); Spitzner Engineers GmbH, 21129 Hamburg (DE)
(72) Erfinder: Lührs, Reinhard, 27432 Hipstedt (DE); Jörg, Spitzner, 22549 Hamburg (DE)
(74) Vertreter: Hansen, Jochen

(56) Entgegenhaltungen:
- EP-A1- 2 053 240
- WO-A1-2007/035758
- DE-A1-102008 003 411
- DE-A1-102008 052 858

## Beschreibung

Die Erfindung betrifft ein Rotorblatt einer Windenergieanlage umfassend eine Oberseite, eine Unterseite, eine Vorderkante, eine Hinterkante, eine Nabenbefestigung zur Befestigung des Rotorblattes an der Nabe der Windenergieanlage, eine Blattspitze und einen Wurzelbereich von der Nabenbefestigung bis zur maximalen Blatttiefe des Rotorblattes, wobei innerhalb des Rotorblattes ein annähernd radial nach außen verlaufender Luftleitkanal zur Leitung von abgesaugter Luft aus einem im Wurzelbereich angeordneten Absaugbereich zu einem Ausblasbereich vorgesehen ist, wobei eine Grenzschichtabsaugung erfolgt. Weiter betrifft die Erfindung ein Verfahren zur Steuerung der Leistung einer Windenergieanlage mit Rotorblättern mit einer Grenzschichtabsaugung.

Aus dem Stand der Technik sind unterschiedliche Anordnungen bekannt, um die Effizienz von Windenergieanlagen zu verbessern. Zum einen ist im Stand der Technik bekannt, die Rotorblattform und dessen Profil zu optimieren und zum anderen ist bekannt, eine Grenzschichtabsaugung an den Rotorblättern zu verwenden, um die Strömung der Luft zu verbessern.

Da die Optimierung der Rotorblätter im Wesentlichen auf den bekannten NACA-Profilen beruht, ist hierbei ein aerodynamisches Maximum annähernd erreicht, so dass diesem Punkt in der aktuellen Diskussion weniger Aufmerksamkeit zukommt. Hingegen sind der Aspekt der Grenzschichtbeeinflussung sowie der Strömungskontrolle von großer Bedeutung. In diesem Bereich wurden bisher noch keine hoch effizienten Verbesserungen für Rotorblätter von Windenergieanlagen hervor gebracht.

Auf der Oberseite des Rotorblattes läuft durch dessen Wölbung beschleunigte Strömung nach dem Passieren der maximalen Wölbung gegen den Druckgradienten am Rotorblattende an und wird dabei verlangsamt. Hierbei verliert die Grenzschicht kinetische Energie. Es erfolgt eine Aufdickung und die Grenzschicht beginnt sich von der Fläche abzulösen, so dass an dem Ablösepunkt aus einer anliegenden Grenzschicht eine von der Rotorblattoberfläche abgelöste Strömung wird. Als Folge sinkt der von der Anströmfläche produzierte Auftrieb und es erhöht sich der Widerstand.

Ziel der Grenzschichtbeeinflussung ist es zu verhindern, dass eine Strömungsablösung von der Oberfläche des Rotorblattes eintritt. Die Grenzschicht muss möglichst lange am Rotorblatt anliegen, um so die Ablösung in den hinteren Rotorblattbereich zu verschieben, so dass die Effizienz einer Windenergieanlage verbessert wird.

Es wird grundsätzlich zwischen der Beeinflussung durch Absaugung und der Beeinflussung durch Ausblasen bei der Grenzschichtmanipulation unterschieden. Bei der Absaugung werden in den betreffenden Bereichen der Rotorblattfläche Öffnungen vorgesehen, über die die Grenzschicht abgesaugt wird. Auf diese Weise kann die Strömung weiter an der Rotorblattoberfläche anliegen. Es bildet sich eine anliegende Grenzschicht aus. Beim Ausblasen wird zusätzliche beschleunigte Luft in die zu beeinflussende Grenzschicht eingeleitet. Die ausgeblasene Luft bringt zur Stabilisierung zusätzliche Energie in die Grenzschicht ein und kann so über einen längeren Zeitraum gehalten werden.

Aus der Druckschrift CH 209 491 ist ein Propeller bekannt, bei dem eine selbstständige Grenzschichtbeeinflussung erfolgt. An der Oberfläche des inneren Bereiches des Propellers sind ein oder mehrere Absaugbereiche über Schlitze vorgesehen, die über mindestens einen radial nach außen geführten innerhalb des Propellers verlaufenden Luftleitkanal mit einem Ausblasbereich an der Propellerspitze verbunden sind. Über die Rotation wird die abgesaugte Luft mit Hilfe der Zentrifugalkraft passiv zur Propellerspitze transportiert und dort ausgeblasen. Zudem ist die Beeinflussung der transportierten Luftmengen über Regelventile und Drosselklappen möglich.

Die Druckschrift EP 1 760 310 A1 offenbart ein Rotorblatt einer Windenergieanlage, bei dem die Rotorblattfläche im Wurzelbereich deutlich vergrößert ist und so eine Leistungssteigerung des Gesamtsystems erfolgt. Das Rotorblattprofil ist im Wurzelbereich lang und weich auslaufend ausgebildet, wodurch eine schmale Hinterkante im Wurzelbereich ausgebildet wird. Die Gesamtfläche des Rotor-blattes im Wurzelbereich wird hierbei um ein Vielfaches gegenüber konventionellen Wurzelbereichen von Rotorblättern erhöht.

Weiter ist aus der Druckschrift EP 2 204 577 A2 ein Rotorblattanbaukomponente bekannt, die an der Hinterkante des Rotorblattes zur Effizienzsteigerung in der Nähe des Wurzelbereiches angeordnet werden kann, so dass die Leistung der Windenergieanlage, an der die entsprechend ausgebildeten Rotorblätter angeordnet sind, effizienter betrieben werden kann, wobei die Anbaukomponente mit dem Rotorblatt in Art eines Hochauftriebsprofils ausbildbar ist.

Die Druckschrift EP 2 292 926 A1 offenbart ein Rotorblatt einer Windenergieanlage, wobei der Wurzelbereich, des optimierten Rotorblattes an der Vorderkante und bzw. oder der Hinterkante optimiert ausgebildet ist, so dass eine kontinuierliche Fortsetzung des Rotorhauptbereiches erzielbar ist.

Aus der Druckschrift WO 2007/035758 A1 ist ein Rotorblatt für eine Windenergieanlage bekannt, bei der eine Absaugung auf der Oberseite des Wurzelbereiches erfolgt, wobei die dort abgesaugte Luft über einen Luftleitkanal an das Blattende geleitet wird und am Blattende aus dem Inneren des Rotorblattes wieder herausgeführt wird, wodurch eine Leistungssteigerung der Windenergieanlage realisiert wird.

Die Druckschrift DE 10 2008 052 858 A1 offenbart ein Profil eines Rotorblattes einer Windenergieanlage, bei dem eine Profiländerung zum allgemeinen Stand der Technik vorgenommen worden ist, wobei zur Profiländerung vorgeschlagen wird, bei einem Rotorblatt einer Windenergieanlage mit einer Oberseite auf der Saugseite und einer Unterseite auf der Druckseite mit einer Skelettlinie und einer Sehne zwischen der Vorderkante und der Hinterkante des Profils die Skelettlinie wenigstens abschnittsweise unterhalb der Sehne in Richtung der Druckseite verlaufen zu lassen.

Ferner offenbart die Druckschrift EP 2 053 240 A1 ein Grenzschicht-Beeinflussungs-Steuerungssystem zur Verbesserung der Grenzschicht an der Hinterkante eines Rotorblattes, wobei hierzu eine Anzahl von Aus- bzw. Einlässen an der Oberseite zur Hinterkante des Rotorblattes vorgesehen sind, die über ein innerhalb des Rotorblattes angeordnetes Versorgungssystem mit Unter- oder Überdruck versorgt werden können, wobei deren Ansteuerung über Ventil erfolgt.

In der Druckschrift DE 10 2008 003 411 A1 sind Flügelprofile für Windenergieanlagen offenbart, die eine im Wesentlichen ovale Saugseite sowie s-förmige Druckseite und eine stumpfe Hinterkante aufweisen.

Problematisch an den im Stand der Technik bekannten Verbesserungen der Leistungsfähigkeit von Rotorblättern ist der große Materialeinsatz und die schlechte Transportierbarkeit im Hinblick auf eine verbesserte Rotorblattform im Wurzelbereich eines herkömmlichen Rotorblattes. Ein im Wurzelbereich verbessertes Rotorblatt weist dort eine größere Oberfläche auf, die nur mit sehr viel Material hergestellt werden kann. Zur Verhinderung von ungünstigen Strömungsverhältnissen muss die Tiefe deutlich länger ausgebildet werden, als die Tiefe des restlichen Rotorblattes. Weiter entstehen durch diese vergrößerte Rotorblattfläche im Wurzelbereich deutlich höhere Kräfte, was eine weitere Verstärkung der Tragstrukturen und den zusätzlichen Einsatz von Material und somit auch Gewicht mit sich bringt.

Weiter problematisch ist die Absaugung im Wurzelbereich, da der Wurzelbereich im Stand der Technik entweder annähernd ein Kreisprofil aufweist oder aber der Wurzelbereich als tiefe, spitz auslaufende Rotorblattoberfläche ausgebildet ist.

Der vorliegenden Erfindung liegt die Aufgabe zugrunde, ein Rotorblatt für eine Windenergieanlage sowie ein Steuerungsverfahren aufzuzeigen, die es ermöglichen, den Ertrag des Gesamtsystems zu steigern, wobei insbesondere eine kompakte Bauweise, ein geringer Materialverbrauch zur Herstellung, geringe Herstellungskosten sowie eine geringe Geräuschemission während des Betriebes als auch nur eine geringe zusätzliche Belastung auf das Rotorblatt selbst berücksichtigt werden. Weiter ist es Aufgabe der Erfindung, den wirtschaftlichen Ertrag einer Windenergieanlage in kleinen Windgeschwindigkeitsbereichen erheblich zu verbessern, insbesondere die Anlaufgeschwindigkeit zu senken, wobei jedoch gleichzeitig eine maximal vorgegebene Nennleistung der Windenergieanlage nicht überschritten wird. Die Leistungssteigerung soll im Wesentlichen im unteren bis mittleren Lastbereich erhöht werden, so dass der Ertrag der Windenergieanlage gesteigert wird. Hierzu soll insbesondere die Strömung im Wurzelbereich verbessert und energetisch stärker ausgenutzt werden, wobei die Strömung länger auf der Rotorblattoberfläche anliegen soll.

Gelöst werden diese Aufgaben mit einem Rotorblatt nach Anspruch 1 und einem Verfahren zur Steuerung nach Anspruch 13.

Dadurch, dass die Hinterkante im Wurzelbereich zumindest in einem Abschnitt entlang des Rotorblattes stumpf ausgebildet ist ein im Wurzelbereich angeordneter Absaugbereich vorgesehen ist, ist eine sehr große Leistungs- bzw. Effizienzsteigerung im Vergleich zu herkömmlichen Rotorblättern mit einem nahezu runden Wurzelbereich möglich. Insbesondere ist nur ein sehr geringer Materialzusatzbedarf notwendig, um die Hinterkante im Wurzelbereich zumindest in einem Abschnitt stumpf auszubilden. Die dort im Vergleich zu einem runden Wurzelbereich auftretenden Kräfte sind nur geringfügig erhöht, so dass auf konstruktionsbedingte Verstärkungen verzichtet werden kann. Gleichzeitig haben Messungen ergeben, dass die Verlängerung im Wurzelbereich mit Ausbildung einer stumpfen Hinterkante ähnliche Leistungs- bzw. Effizienzsteigerungen bewirkt, wie ein im Wurzelbereich tief gezogenes aus dem eingangs genannten Stand der Technik bekanntes Rotorblatt.

Die stumpf ausgebildete Hinterkante geht im Übergangsbereich vom Wurzelbereich in den eigentlichen Rotorblattbereich sanft in die Hinterkante des im Stand der Technik bekannten Standard-Rotorblattes über.

Es ist eine sehr breite und stumpf ausgebildete Hinterkante bis direkt in den Bereich der Nabenbefestigung möglich, wobei insbesondere die Breite der Hinterkante zum Nabenbereich hin vergrößert ausgebildet sein kann. Durch diese Ausgestaltung ist es möglich die Windenergieanlage bereits bei kleineren Windgeschwindigkeiten in den Leistungs- bzw. Arbeitsbetrieb zu überführen, so dass eine größere Menge an Windenergie durch die Windenergieanlage in elektrische Energie umgewandelt wird.

Die Tiefe des Rotorblattes im Wurzelbereich bleibt trotz Veränderung der Hinterkante weiterhin hinter der Tiefe des Rotorblattes an der tiefsten Stelle zurück.

Die Übergänge der stumpf ausgebildeten Hinterkante zur Ober- und/oder Unterseite können leicht abgerundet oder kantig ausgebildet werden, um die Strömung in diesem Punkt weiter zu beeinflussen. Bevorzugt wird eine leichte Abrundung.

Ein weiterer besonderer Vorteil ist, dass die Transportfähigkeit für neue als auch zur Revision anstehende Rotorblätter gegeben bleibt, da die Tiefe des Rotorblattes im Wurzelbereich nicht wesentlich erhöht wird. Dies spielt eine große Rolle, da die Durchfahrtshöhe von Brücken, Tunneln und dgl. beschränkt ist und eine Trennung des Rotorblattes teurer im Handling ist als der Transport in einem Stück, insbesondere bezogen auf den Wurzelbereich.

Als Materialien können die üblichen zur Herstellung von Rotorblättern verwendeten Komponenten verwendet werden.

Zur weiteren Verbesserung ist der Wurzelbereich als Wortmann-Profil mit einer stumpfen, breiten und/oder abgeschnittenen Hinterkante ausgebildet. Hierdurch ergibt sich strömungstechnisch ein verbessertes Anströmverhalten im Wurzelbereich. Überraschenderweise ist Wortmann-Profil mit einer stumpfen, breiten und/oder abgeschnittenen Hinterkante äquivalent zu der Ausgestaltung des Wurzelbereiches des Rotorblattes mit einer sehr tief gezogenen Rotorblattoberfläche, wie diese im Stand der Technik bekannt ist. Insbesondere geht das Wortmann-Profil mit einer stumpfen, breiten und/oder abgeschnittenen Hinterkante im Wurzelbereich fließend in die Hinterkante des Rotorblattes über. Als mögliche und bevorzugte Wortmann-Profile sind insbesondere das Wortmann FX77-W-500 und ähnliche Profile von großer Bedeutung. Weiter sind das Wortmann FX77-W-400, als auch das Wortmann FX77-W-343 möglich. Diese unterscheiden sich insbesondere von deren Tiefe und Hinterkantenbreite.

Bei Bedarf kann zusätzlich die Vorderkante des Rotorblattes im Wurzelbereich als Wortmann-ähnliche Vorderkante ausgebildet werden, um so die Anströmung zusätzlich zu verbessern. Hierdurch wird eine weitere Leistungssteigerung bewirkt, da die Strömung über einen größeren Bereich laminar gehalten wird und so keine Verluste durch entstehende Turbulenzen der Energieerzeugung entgegen wirken.

Wenn der Absaugbereich an der Hinterkante und/oder an der Oberseite des Wurzelbereichs angeordnet ist, kann ein Teil der strömenden Luftmassen bereits auf der Oberseite und/oder an der Hinterkante abgesaugt werden. Hierzu ist die zusätzliche Anordnung vereinzelter oder aber auch einer Vielzahl von Öffnungen auf der Oberseite und/oder an der Hinterkante des Rotorblattes möglich.

Die Absaugung an der Oberseite, bevorzugt an der Oberseite nahe der Hinterkante und/oder im Mittelbereich des Wurzelbereiches, bewirkt eine relativ frühzeitige Grenzschichtbeeinflussung, so dass die Strömung länger an der Oberfläche anliegt.

Die Absaugung an der Hinterkante im Wurzelbereich bewirkt nur dort die Grenzschichtabsaugung bzw. -beeinflussung. Diese ist derart effizient, dass die Strömung oberhalb der Rotorblattoberfläche über den gesamten Bereich anliegend ausgebildet ist.

Die Absaugung an der Oberseite kann mit der Absaugung an der Hinterkante kombiniert werden, wodurch die Effizienz weiter verbessert werden kann. Hierzu ist auch eine Steuerung der einzelnen Öffnungen möglich, wobei einige Öffnungen geschlossen und einige Öffnungen geöffnet sein können, so dass in Abhängigkeit vom Leistungsbereich die Absaugung über die Oberseite und/oder über die Hinterkante erfolgt.

Dadurch, dass der Ausblasbereich in der Blattspitze angeordnet ist, wobei bevorzugt der Ausblasbereich an der Oberseite und/oder besonders bevorzugt an der Hinterkante des Rotorblattes der Blattspitze und/oder an einem, bevorzugt auf der Leeseite des Rotorblattes, an der Blattspitze vorgesehenen Winglets angeordnet ist, erfolgt eine gezielte Beeinflussung der Luftströmung an der Blattspitze. Der Weg, den die abgesaugte Luft zurücklegt ist maximal, wodurch die Fliehkraft ebenfalls maximal ist, um so entsprechende Luftmengen zu abzusaugen, zu transportieren und mit einem hohen Energiegehalt wieder auszubringen.

Die Ausbringung an der Oberseite des Rotorblattes bewirkt bereits eine Beschleunigung der Luft und der Grenzschicht auf dem Profil und bringt auf diese Weise bereits sehr früh eine zusätzliche Energieeinbringung. Die Grenzschicht wird auf dem Profil beschleunigt.

Die Ausbringung an der Hinterkante verbessert die Strömung über das Profil deutlich, indem die zusätzlich eingebrachte Luft und Energie die strömende Luft weiter beschleunigt. Diese Ausgestaltung führt zu einer Geräuschminimierung an der Blattspitze.

Weiter kann die Luft auf der Oberfläche oder an der Hinterkante eines an der Rotorblattspitze angeordneten Winglets, das bevorzugt auf der Leeseite des Rotorblattes angeordnet ist, ausgebracht werden. Dies bewirkt eine weitere Geräuschminimierung. Die Ausblasung auf dem Winglet kann hierbei als NACA-Hutze ausgebildet sein. Falls die Ausbringung über einen großen Durchlass erfolgt, haben die austretende Luft und die darin enthaltene Energie keinen weiteren Nutzen.

Das Winglet hat insbesondere die Aufgabe einen äußeren Randwirbel zu reduzieren, der durch eine normale Blattspitze entstehen kann. Gleichwohl kann unter gezielter Ausblasung der abgesaugten Luft an der Hinterkante des Rotorblattes im Bereich der Blattspitze die Bildung eines Randwirbels reduziert werden um so die Strömungsverhältnisse zu optimieren.

Dadurch, dass der Ansaugbereich und/oder der Ausblasbereich als Bohrung(en) und/oder Schlitzung(en), bevorzugt als Zacken ausgebildet ist/sind, kann auf die Geräuschemissionen positiv eingewirkt werden. Insbesondere die Zacken mit darin befindlichen Bohrungen reduzieren die Lärmbelästigung durch strömende Luft immens, so dass die Geräuschbelastung der Umwelt deutlich reduziert wird. Die Zacken bewirken dabei eine homogene Verteilung, insbesondere eine beruhigte Ausbringung der Luft. Eine Nutzung derartiger Zacken zur Absaugung ist gleichwohl sehr effizient. Bei der Ausblasung können hierbei jedoch kleinere Zacken zum Einsatz kommen, um so eine stärkere, jedoch feinere Ausblasung zu erzielen. Zudem sind die Zacken sehr einfach zu konstruieren und durch Einschneiden oder Fräsen leicht zu realisieren.

Zur Regelung des Luftflusses ist im Luftleitkanal ein Ventil zur Steuerung der Grenzschichtbeeinflussung angeordnet. Dieses lässt sich stufenlos einstellen, um so die Menge an abgesaugter und transportierter Luft zu regeln und zu steuern. Jede Stellung von vollständig geschlossen, als Schutz der Anlage vor einer Überlastung, bis zu vollständig geöffnet, zum Anfahren der Anlage bis weit in den Leistungsbetrieb hinein, ist möglich.

Zur weiteren Verbesserung insbesondere zur Steuerung der Windenergieanlage und zur Verringerung der minimalen Anlaufwindgeschwindigkeit sind Fördermittel zur aktiven Grenzschichtbeeinflussung durch Luftleitung innerhalb des Luftleitkanals vorgesehen, so dass Luft sowohl vom Absaugbereich zum Ausblasbereich als auch in entgegen gesetzter Richtung transportiert werden kann. Derartige Fördermittel können Pumpen, Fördereinrichtungen, Gebläse und/oder Ventilatoren oder dgl. sein, die Luft sowohl in die eine Richtung, als auch in die andere Richtung transportieren. Beim Transport der Luft analog zur Absaugung im Wurzelbereich, resultierend aus der durch die Rotation bewirkten Fliehkraft, kann die Anlaufgeschwindigkeit deutlich herabgesetzt werden, so dass die Windenergieanlage bereits bei kleineren Windgeschwindigkeiten in den Produktivmodus übergeht. Beim entgegen gesetzten Lufttransport, einem Rücktransport der Luft von der Blattspitze zum Wurzelbereich hin, erfolgt eine umgekehrte Beeinflussung der Grenzschicht.

Weiter kann zur weiteren Verbesserung der inneren Strömung ein Grenzschichtzaun oder ein Grenzschichtring vorgesehen werden, um so die Strömungen zu begrenzen und einen inneren Randwirbel zu reduzieren. Hierzu kann insbesondere eine geschwungene aerodynamische Form des Grenzschichtzauns rotorblattweise gewählt werden.

Die gesamten vorgestellten Verbesserungen sind insbesondere derart ausgelegt, dass diese auch als nachträgliche Anbaukomponenten auszulegen sind. Damit werden insgesamt auch die Anbaukomponenten beansprucht, die ein Rotorblatt der Standardausführung derart verbessern können, so dass ein Rotorblatt zumindest mit den Merkmalen des Hautpanspruchs ausgebildet ist. Hierzu ist ein erstes Anbauteil im Wurzelbereich derart ausgebildet, dass hier ein Aufsatzelement auf den normal kreisförmig ausgebildeten Wurzelbereich aufsetzbar ist und das eine stumpfe Hinterkante aufweist, an der ein Absaugbereich vorgesehen ist. Ein zweites Anbauteil ist für den Bereich der Blattspitze vorgesehen, so dass hier ein Ausblasbereich realisiert ist. Ein weiteres Teil zur nachträglichen Verbesserung eines Standardrotorblattes ist der Luftleitkanal für die Einbringung in den Innenraum des Rotorblattes. Zur Befestigung der Anbaukomponente können Standardbefestigungsverfahren, wie Laminieren, Schrauben, Kleben, Bolzen oder ähnliche Verfahren, die allesamt im Bereich der Rotorblatttechnik bekannt sind, angewendet werden.

Das Verfahren zur Steuerung der Leistung einer Windenergieanlage mit gemäß dieser Druckschrift beanspruchten Rotorblättern mit einer Grenzschichtabsaugung, in einem leistungsfreien Bereich, einem Anlaufbereich, einem Arbeitsbereich und einem Maximalleistungsbereich, umfasst, dass
- im leistungsfreien Bereich und/oder im Maximalleistungsbereich keine Grenzschichtabsaugung,
- im Anlaufbereich eine maximal verfügbare Grenzschichtabsaugung und
- im Arbeitsbereich eine variable Grenzschichtabsaugung, beginnend bei kleiner Leistung mit einer maximalen Grenzschichtabsaugung und endet mit einer minimalen Grenzschichtabsaugung bei großer Leistung
   erfolgt.

Hierdurch wird eine zusätzliche Verbesserung der Windenergieanlageneffizienz im unteren Leistungsbereich als auch im Anlaufbereich erzielt, so dass mehr Energie bei geringeren Windstärken produziert werden kann. Gleichwohl kann eine Überlastung bereits frühzeitig verhindert werden, wenn die Grenzschichtabsaugung auf ein Minimum herunter gefahren wird.

Weiter verbessert wird das Verfahren zur Steuerung einer Windenergieanlage dadurch, dass bei Erreichen einer maximalen Nennleistung die Grenzschichtabsaugung deaktiviert wird. Das Erreichen einer maximalen Nennleistung erfolgt bereits bei einer niedrigeren Windgeschwindigkeit, so dass der Einsatz der Grenzschichtbeeinflussung rechtzeitig gestoppt werden kann, da ansonsten durch eine zu große Leistung der Generator der Windenergieanlage zerstört oder zumindest beschädigt werden würde.

Nachfolgend werden der Stand der Technik und Ausführungsbeispiele der Erfindung anhand der beiliegenden Zeichnungen detailliert beschrieben.

Darin zeigen:
- Fig. 0: eine Darstellung eines aus dem Stand der Technik bekannten Rotorblattes;
- Fig. 1: eine Darstellung eines ersten Ausführungsbeispiels des erfindungsgemäßen Rotorblattes;
- Fig. 2a: eine Detaildarstellung des Wurzelbereiches eines zweiten Ausführungsbeispiels des erfindungsgemäßen Rotorblattes;
- Fig. 2b: eine Detaildarstellung des Wurzelbereiches eines dritten Ausführungsbeispiels des erfindungsgemäßen Rotorblattes;
- Fig. 2c: eine Detaildarstellung des Wurzelbereiches eines vierten Ausführungsbeispiels des erfindungsgemäßen Rotorblattes;
- Fig. 3a: eine Querschnittsdarstellung des Wurzelbereiches eines aus dem Stand der Technik bekannten Rotorblattes entlang der Schnittlinie A-A aus Fig. 0;
- Fig. 3b: eine Querschnittsdarstellung des Wurzelbereiches des ersten Ausführungsbeispiels des erfindungsgemäßen Rotorblattes entlang der Schnittlinie B-B aus Fig. 1;
- Fig. 3c: eine Querschnittsdarstellung des Wurzelbereiches eines weiteren Ausführungsbeispiels des erfindungsgemäßen Rotorblattes;
- Fig. 4: eine Detaildarstellung des Wurzelbereiches eines fünften Ausführungsbeispiels des erfindungsgemäßen Rotorblattes;
- Fig. 5: eine Detaildarstellung des Wurzelbereiches eines sechsten Ausführungsbeispiels des erfindungsgemäßen Rotorblattes;
- Fig. 6: eine Darstellung der Blattspitze mit einem Winglet eines siebten Ausführungsbeispiels des erfindungsgemäßen Rotorblattes und
- Fig. 7: eine Detaildarstellung der Blattspitze des siebten Ausführungsbeispiels des erfindungsgemäßen Rotorblattes.

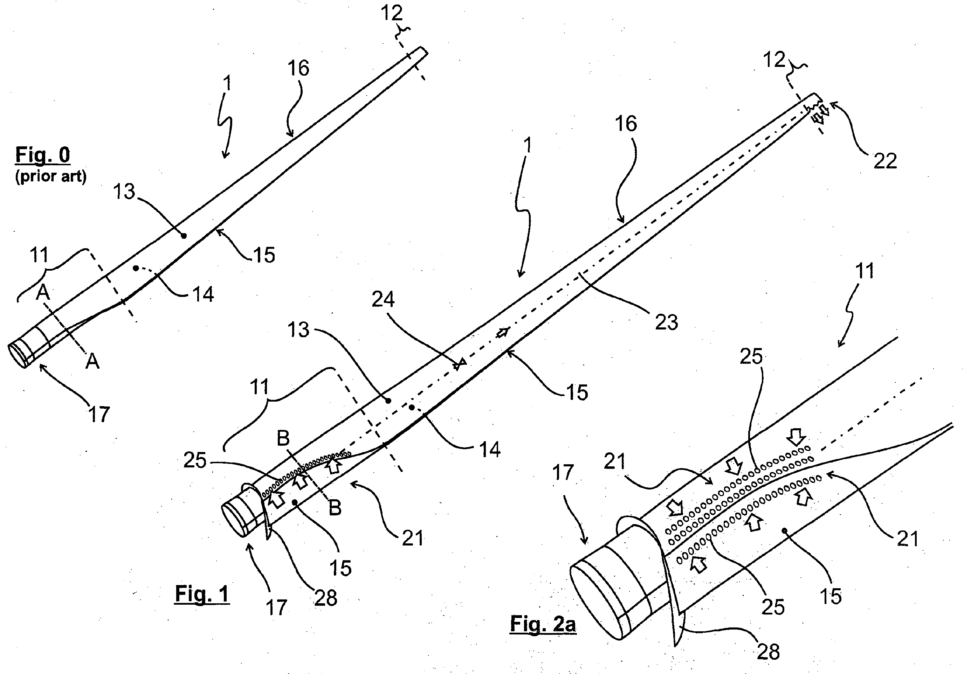

Die Fig. 0 zeigt den Stand der Technik, wie üblicherweise Rotorblätter 1 von Windkraftanlagen ausgestaltet sind. Anhand dieser Figur soll der grundsätzliche Aufbau eines Rotorblattes 1 kurz dargestellt werden.

In Fig. 0 ist eine Darstellung eines aus dem Stand der Technik bekannten Rotorblattes 1 gezeigt.

Das Rotorblatt 1 besteht aus einer länglichen Grundstruktur mit einer Oberseite 13, einer Unterseite 14, einer zur Luv-Seite ausgerichteten Vorderkante 16, einer Hinterkante 15 an der Lee-Seite. Das Rotorblatt 1 kann in vier Abschnitte gegliedert werden: der erste Abschnitt umfasst die Nabenbefestigung 17, wobei die Nabe des Generators der Windenergieanlage das Rotorblatt 1 aufnimmt und dort befestigt wird; der zweite Abschnitt kann als Wurzelbereich 11 bezeichnet werden. Der Wurzelbereich 11 erstreckt sich von der Nabenbefestigung 17 bis zu der Stelle des Rotorblattes 1, an der das Rotorblatt 1 die größte Tiefe aufweist. Üblicherweise ist der Wurzelbereich 11 im Bereich von Anfang des Rotorblattes 1 bis zu 1/10 bis 1/3 der Rotorblattlänge zu definieren. Der dritte Abschnitt ist im Wesentlichen ein aerodynamisches Profil, welches im weiteren Verlauf an Tiefe verliert. Der vierte Abschnitt umfasst die Blattspitze 12. Die Blattspitze 12 stellt das Ende des Rotorblattes 1 dar.

Im Nachfolgenden wird grundsätzlich auf die zuvor allgemein im Stand der Technik bekannten Merkmale des Rotorblattes 1 Bezug genommen ohne diese erneut zu erwähnen.

Nachfolgend wird nunmehr auf das erfindungsgemäße Rotorblatt 1 eingegangen und dieses detailliert erläutert und beschrieben:
In Fig. 1 ist ein erstes Ausführungsbeispiels des erfindungsgemäßen Rotorblattes 1 dargestellt.

Das Rotorblatt 1 weist den gleichen Grundaufbau und die gleichen Grundelemente wie das Rotorblatt 1 aus dem Stand der Technik, bekannt aus der Beschreibung zu Fig. 0, auf.

Der Wurzelbereich 11 des Rotorblattes 1 ist durch eine stumpf ausgebildete Hinterkante 15 mit einer großen Breite verändert. An der Oberseite 13 des Wurzelbereiches 11 ist im hinteren Bereich, in der Nähe der Hinterkante 15, der Absaugbereich 21 angeordnet. Der Absaugbereich 21 umfasst Absaugbohrungen 25. In diesem Ausführungsbeispiel handelt es sich um 24 einzelne Absaugbohrungen 25, die in einer Reihe nebeneinander entlang der Hinterkante 15 angeordnet sind. Die Absaugöffnungen können aber auch anders ausgebildet sein und im Wurzelbereich anders angeordnet werden. Jedoch stellt dieses Ausführungsbeispiel ein besonders bevorzugte Ausführungsform dar, da diese sehr spezielle Ausgestaltung überraschenderweise in einzelnen Tests besonders effizient die Leistung der Windenergieanlage gesteigert hat.

Die Absaugbohrungen 25 sind über eine im Inneren des Rotorblattes 1 angeordnete, hier nicht weiter dargestellte, Zusammenführung mit einem Luftleitkanal 23 verbunden. Dieser Luftleitkanal 23 ist innerhalb des Rotorblattes 1 angeordnet und führt annähernd radial nach Außen zur Blattspitze 12 des Rotorblattes 1.

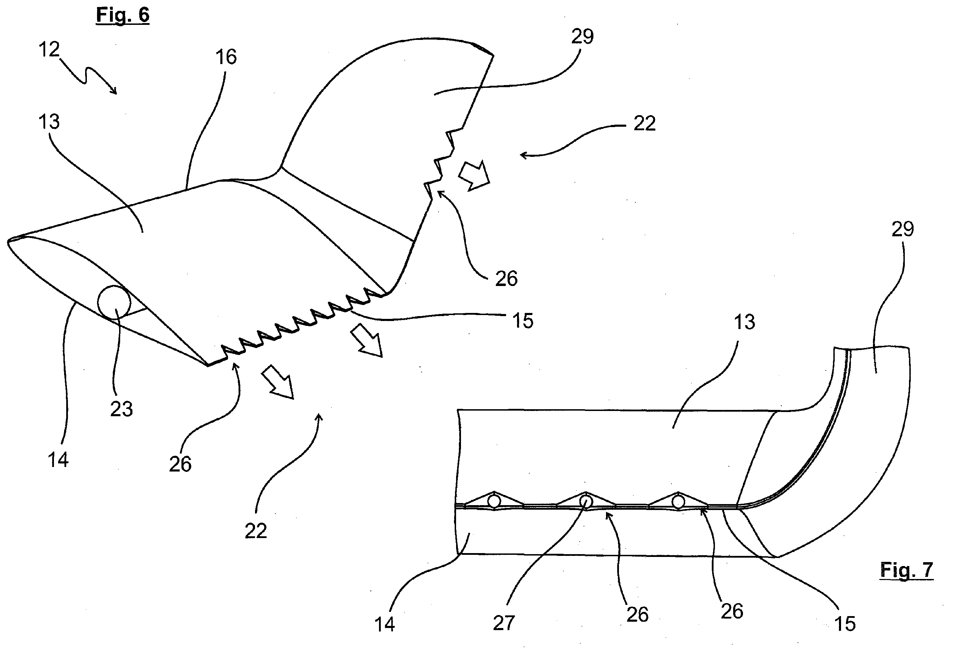

An der Blattspitze 12 ist an der Hinterkante 15 des Rotorblattes 1 ein Ausblasbereich 22 vorgesehen. Dieser Ausblasbereich 22 umfasst in diesem Ausführungsbeispiel drei Zacken 26, deren Aufbau in Fig. 6 und 7 weiter beschrieben wird.

Innerhalb des Luftleitkanals 23 ist ein Ventil vorgesehen, das die Menge der transportierten Luft begrenzen kann.

In dieser Variante erfolgt durch die Drehung des Rotorblattes 1 um die Nabe der Windenergieanlage, bedingt durch die Zentrifugalkraft, ein Lufttransport von der Seite der Nabenbefestigung 17 in Richtung Blattspitze 12 durch den Luftleitkanal 23. Hierbei wird Luft nahe der Hinterkante 15 im Wurzelbereich 11 durch den Absaugbereich 21 mit Hilfe der Absaugbohrungen 25 abgesaugt und durch den Luftleitkanal 23 permanent weiter transportiert. Am Ende des Luftleitkanals 23, an der Blattspitze, erfolgt dann der Austritt der Luft durch den Ausblasbereich 22 an der Hinterkante 15 der Blattspitze 12. Die Strömung der Luft ist mit Hilfe von Strömungspfeilen ⇒ dargestellt.

Durch die Absaugung der Luft durch den Absaugbereich 21 im Wurzelbereich 11 erfolgt dort eine Grenzschichtabsaugung. Durch das Ausblasen der abgesaugten Luft durch den Ausblasbereich 22 in der Blattspitze 12 erfolgt dort ebenfalls eine Grenzschichtbeeinflussung, jedoch dort durch Einbringung von Energie in die dort vorherrschende Luftströmung. Beide Grenzschichtbeeinflussungen bewirken eine anliegende bzw. optimierte Strömung in den Bereichen, so dass dies zu einer Steigerung der Effizienz des Rotorblattes 1 und somit zur Effizienzsteigerung der gesamten Windenergieanlage führt.

Im Weiteren werden für gleiche Elemente die gleichen Bezugszeichen wie in Fig. 1 verwendet. Zu deren prinzipieller Funktion wird auf Fig. 1 verwiesen.

Fig. 2a zeigt eine Detaildarstellung des Wurzelbereiches eines zweiten Ausführungsbeispiels des erfindungsgemäßen Rotorblattes.

Insbesondere ist hier der Absaugbereich 21 im Vergleich zu dem Absaugbereich 21 aus dem Ausführungsbeispiel aus Fig. 1 erweitert. Zusätzlich zu der Absaugung an der Oberseite 13 des Wurzelbereiches 11 erfolgt eine Absaugung an der Hinterkante 15 des Rotorblattes 1. Dies kann bei einzelnen Ausgestaltungen der Hinterkante 15 und insbesondere des Übergangsbereiches der Oberseite 13 zur Hinterkante 15 zu einer Verbesserung der anliegenden Strömung führen.

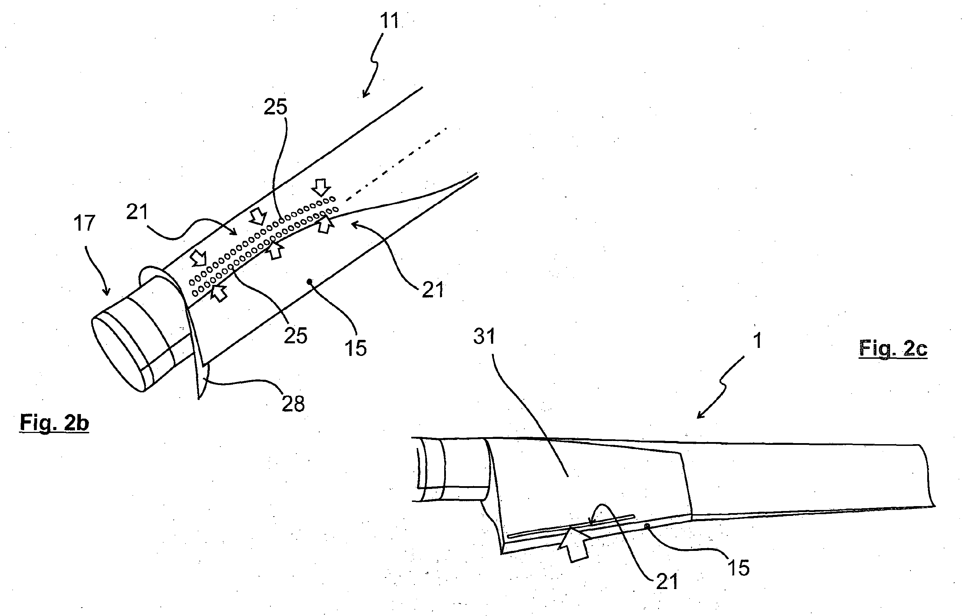

Fig. 2b zeigt eine Detaildarstellung des Wurzelbereiches eines dritten Ausführungsbeispiels des erfindungsgemäßen Rotorblattes.

Insbesondere ist hier der Absaugbereich 21 im Vergleich zu dem Absaugbereich 21 aus dem Ausführungsbeispiel aus Fig. 1 erweitert. Zusätzlich zu der Absaugung mittels einer Reihe von Bohrungen an der Oberseite 13 nahe der Hinterkante 15 des Wurzelbereiches 11 erfolgt eine Absaugung in einer zweiten Reihe von Bohrungen 25 an der Oberseite 13 des Rotorblattes 1. Dies führt bei einzelnen Ausgestaltungen der Hinterkante 15 und insbesondere des Übergangsbereiches der Oberseite 13 zur Hinterkante 15 zu einer deutlich gesteigerten anliegenden Strömung.

Fig. 2c zeigt eine Detaildarstellung des Wurzelbereiches eines vierten Ausführungsbeispiels des erfindungsgemäßen Rotorblattes.

Insbesondere ist hier der Absaugbereich 21 im Vergleich zu den Absaugbereichen 21 aus den vorherigen Ausführungsbeispielen als Langschlitz ausgebildet und an der Oberseite 13 nahe der Hinterkante 15 des Wurzelbereiches 11 angeordnet. Dies führt bei einzelnen Ausgestaltungen der Hinterkante 15 und des andersartig ausgestalteten Wurzelbereiches mit einem Wortmann-ähnlichen Profil zu einer Verbesserung der anliegenden Strömung, wobei dies wiederum zu einer weiteren Effizienzsteigerung führt.

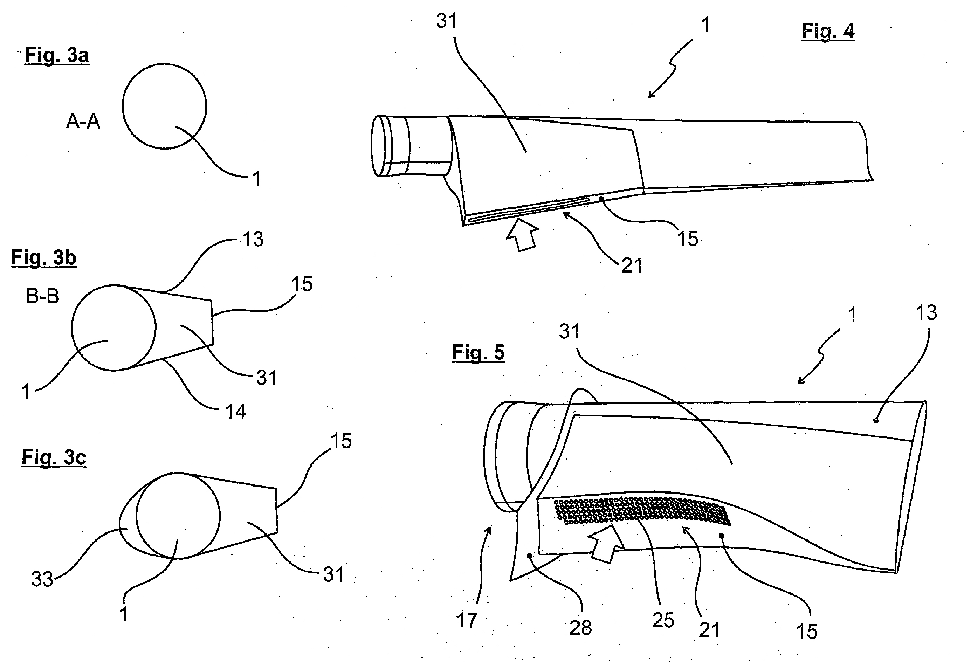

In Fig. 3a ist eine Querschnittsdarstellung des Wurzelbereiches 11 eines aus dem Stand der Technik bekannten Rotorblattes 1 entlang der Schnittlinie A-A aus Fig. 0 gezeigt. Der Querschnitt eines im Stand der Technik bekannten Rotorblattes 1 an der Schnittlinie A-A ist im Wesentlichen eine Kreisfläche. Dieser kreisförmige Querschnitt geht im weiteren Verlauf des Rotorblattes in Richtung Blattspitze über in ein aerodynamisch geformtes Rotorblatt.

Fig. 3b zeigt eine Querschnittsdarstellung des Wurzelbereiches 11 des ersten Ausführungsbeispiels des erfindungsgemäßen Rotorblattes 1 entlang der Schnittlinie B-B aus Fig. 1. Das aus Fig. 3a bekannte herkömmliche kreisförmige Rotorblattquerschnittsprofil ist um ein Absauganbauteil 31 auf der Lee-Seite, also der vom Wind abgewandten Seite, ergänzt. Dieses Absauganbauteil 31 ist in diesem Ausführungsbeispiel ein modifiziertes Wortmann FX77-W-500 Profil mit einer stumpfen Hinterkante 15 und einem kreisförmigen Nasenbereich an der Vorderkante 16 des Wurzelbereiches 11. Zusätzlich können der obere Übergang von der Oberseite 13 zur Hinterkante 15 als auch der untere Übergang von der Unterseite 14 zur Hinterkante 15 abgerundet ausgebildet werden. Insgesamt bildet sich eine sehr breite Hinterkante 15 aus, die in Kombination mit der Grenzschichtabsaugung ein sehr effizientes Rotorblatt 1 darstellt. Diese Variante stellt eine bevorzugte Ausführungsvariante dar.

Fig. 3c zeigt eine Querschnittsdarstellung des Wurzelbereiches 11 eines dritten Ausführungsbeispiels des erfindungsgemäßen Rotorblattes 1. Hierbei ist ergänzend zu dem Ausführungsbeispiel aus Fig. 3b an der Vorderkante eine zusätzliches Vorderkantenanbauteil 33 zumindest im Wurzelbereich 11 angeordnet. Dieses zusätzliche Vorderkantenanbauteil 33 entspricht in diesem Ausführungsbeispiel einer Wortmann-ähnlichen Vorderkante und dient der gezielten Luftströmungsbeeinflussung, insbesondere zur weiteren Optimierung der anliegenden Strömung. Damit sind sowohl die Luv- als auch die Lee-Seite des Wurzelbereiches 11 angepasst.

In Fig. 4 ist eine Detaildarstellung des Wurzelbereiches 11 eines fünften Ausführungsbeispiels des erfindungsgemäßen Rotorblattes 1 gezeigt.

Der Wurzelbereich 11 ist durch ein Anbauteil, nämlich ein Absauganbauteil 31 verändert worden. Das Absauganbauteil 31 hat in diesem Ausführungsbeispiel einen Querschnitt, der einem Wortmann-Profil FX77W-343 ähnelt. An der stumpf ausgebildeten Hinterkante 15 des Wurzelbereiches 11 ist der Absaugbereich 21 vorgesehen, der in diesem Ausführungsbeispiel als Schlitz ausgebildet ist.

Fig. 5 zeigt eine Detaildarstellung des Wurzelbereiches 11 eines sechsten Ausführungsbeispiels des erfindungsgemäßen Rotorblattes 1. Hierbei ist der Absaugbereich 21 ähnlich wie bereits in Fig. 1 dargestellt ausgebildet.

Es handelt sich bei der Veränderung des Wurzelbereiches 11 um ein Anbauteil, nämlich ein Absauganbauteil 31, das einen Querschnitt ähnlich dem Wortmann-Profil FX77-W-500 aufweist, wobei die Hinterkante 15 stumpf ausgebildet ist.

Der Absaugbereich 21 weist in diesem Ausführungsbeispiel mehrere Reihen von Absaugbohrungen 25 auf, die entlang der Hinterkante, bevorzugt beginnend an der oberen Kante zur Oberseite 13, angeordnet sind.

Des Weiteren ist im Übergangsbereich vom Wurzelbereich 11 zur Nabenbefestigung 17 ein Grenzschichtzaun 28 vorgesehen, der innere Randwirbel verringert. Der Grenzschichtzaun 28 ist an der Nabenbefestigung 17 aerodynamisch derart angepasst, so dass keine Verwirbelungen entstehen.

Fig. 6 zeigt eine Darstellung der Blattspitze 12 mit einem Winglet 29 eines siebten Ausführungsbeispiels des erfindungsgemäßen Rotorblattes 1.

Insbesondere ist in dieser Figur der Ausblasbereich 22 im Detail dargestellt; zu erkennen sind die Zacken 26, die beispielsweise durch Einschnitte in die Hinterkante erstellt werden können. In der Mitte jeweils eines Zackens 26 ist eine Ausblasbohrung 27 vorgesehen, die mit dem Luftleitkanal 23 in Verbindung steht, so dass die innerhalb des Luftleitkanals 23 strömende Luft durch diese Ausblasbohrungen 27 austreten kann.

An der Blattspitze 12 können einzelne große oder eine Vielzahl von kleineren Zacken 26 mit darin vorgesehenen Ausblasbohrungen 27 vorgesehen sein. Die Zacken 26 beruhigen die Strömung der Luft beim Austritt an der Hinterkante 15 im Bereich der Blattspitze 12.

Zusätzlich ist an der Blattspitze 12 ein Winglet 29 mit weiteren Ausblasbohrungen 27 und Zacken 26 vorgesehen, wobei bevorzugt das Winglet 29 auf der Lee-Seite angeordnet ist.

Die gesamte Konstruktion der Blattspitze 12 mit oder ohne das Winglet 29 kann als Ausblasanbauteil 32 ausgebildet werden, so dass eine Nachrüstung bestehender Windenergieanlagen möglich wird.

In Fig. 7 ist eine Detaildarstellung der Blattspitze 12 des siebten Ausführungsbeispiels aus Fig. 6 des erfindungsgemäßen Rotorblattes 1 gezeigt.

Es sind hier die Ausblasbohrungen 27 in den Zacken 26 an der Hinterkante 15 des Rotorblattes 1 im Bereich der Blattspitze 12 detailliert dargestellt.

Die dargestellten Ausführungsbeispiele sind nicht abschließend zu sehen, sondern stellen lediglich Ausführungsbeispiele des erfindungsgemäßen Rotorblattes dar. Form, Größe, Länge und Dicke sind an die Gegebenheiten anzupassen.

### Bezugszeichenliste

- 1: Rotorblatt
- 11: Wurzelbereich
- 12: Blattspitze
- 13: Oberseite
- 14: Unterseite
- 15: Hinterkante
- 16: Vorderkante
- 17: Nabenbefestigung

- 21: Absaugbereich
- 22: Ausblasbereich
- 23: Luftleitkanal
- 24: Ventil
- 25: Absaugbohrung
- 26: Zacken
- 27: Ausblasbohrung
- 28: Grenzschichtzaun
- 29: Winglet

- 31: Absauganbauteil
- 32: Ausblasanbauteil
- 33: Vorderkantenanbauteil

## Patentansprüche

1. Rotorblatt (1) einer Windenergieanlage umfassend eine Oberseite (13), eine Unterseite (14), eine Vorderkante (16), eine Hinterkante (15), eine Nabenbefestigung (17) zur Befestigung des Rotorblattes (1) an der Nabe der Windenergieanlage, eine Blattspitze (12) und einen Wurzelbereich (11) von der Nabenbefestigung (17) bis zur maximalen Blatttiefe des Rotorblattes (1),
wobei innerhalb des Rotorblattes (1) ein im Wesentlichen radial nach außen verlaufender Luftleitkanal (23) zur Leitung von abgesaugter Luft aus einem im Wurzelbereich (11) angeordneten Absaugbereich (21) zu einem Ausblasbereich (22) vorgesehen ist und eine Grenzschichtabsaugung erfolgt,
wobei
die Hinterkante (15) im Wurzelbereich (11) zumindest in einem Abschnitt entlang des Rotorblattes (1) stumpf ausgebildet ist,
wobei der Wurzelbereich (11) als Wortmann-ähnliches oder als Wortmann-Profil mit einer stumpfen, breiten und/oder abgeschnittenen Hinterkante (15) ausgebildet ist
und
das Wortmann-ähnliche oder das Wortmann-Profil mit einer stumpfen, breiten und/oder abgeschnittenen Hinterkante (15) im Wurzelbereich (11) fließend in die Hinterkante (15) des Rotorblattes (1) übergeht,
wobei das Profil mit der stumpfen, breiten und/oder abgeschnittenen Hinterkante (15) mit einem Grenzschichtzaun (28) oder Grenzschichtring im Wurzelbereich (11) nahe der Nabenbefestigung (17) beginnt.

2. Rotorblatt (1) nach Anspruch 1,
**dadurch gekennzeichnet, dass**
die Vorderkante (16) im Wurzelbereich (11) einen halbkreisförmigen Schnitf aufweist.

3. Rotorblatt (1) nach Anspruch 1 oder 2,
**dadurch gekennzeichnet, dass**
die Öffnungen des Ansaugbereiches (21) und/oder des Ausblasbereiches (22) als Bohrungen (25, 27) ausgebildet sind.

4. Rotorblatt (1) nach Anspruch 1, 2 oder 3,
**dadurch gekennzeichnet, dass**
die Öffnungen des Ansaugbereiches (21) als Bohrungen (25, 27) und/oder Schlitzungen ausgebildet sind.

5. Rotorblatt (1) nach Anspruch 1, 2, 3 oder 4,
**dadurch gekennzeichnet, dass**
die Öffnungen des Ansaugbereiches (21) und/oder des Ausblasbereiches (22) als Zacken (26) ausgebildet sind, wobei die Zacken (26) nahe der Hinterkante angeordnet sind.

6. Rotorblatt (1) nach einem der Ansprüche 1 bis 5,
**dadurch gekennzeichnet, dass**
der Absaugbereich (21) an der Hinterkante (15) und/oder an der Oberseite (13) des Wurzelbereichs (11) angeordnet ist.

7. Rotorblatt (1) nach einem der Ansprüche 1 bis 6,
**dadurch gekennzeichnet, dass**
der Absaugbereich (21) an der Oberseite (13) des Wurzelbereichs (11) nahe der Hinterkante (15) angeordnet ist.

8. Rotorblatt (1) nach einem der Ansprüche 1 bis 7,
**dadurch gekennzeichnet, dass**
der Ausblasbereich (22) in der Blattspitze (12) angeordnet ist.

9. Rotorblatt (1) nach einem der Ansprüche 1 bis 8,
**dadurch gekennzeichnet, dass**
der Ausblasbereich (22) an der Oberseite (13) des Rotorblattes, an der Hinterkante (15) des Rotorblattes (1) der Blattspitze (12) und/oder an einem an der Blattspitze (12) vorgesehenen Winglets (29) angeordnet ist.

10. Rotorblatt (1) nach einem der Ansprüche 1 bis 9,
**dadurch gekennzeichnet, dass**
der Ausblasbereich (22) an einem an der Blattspitze (12) und auf der Leeseite des Rotorblattes (1) vorgesehenen Winglets (29) angeordnet ist.

11. Rotorblatt (1) nach einem der Ansprüche 1 bis 10,
**dadurch gekennzeichnet, dass**
im Luftleitkanal (23) ein Ventil (24) zur Steuerung der Grenzschichtbeeinflussung angeordnet ist.

12. Rotorblatt (1) nach einem der Ansprüche 1 bis 11,
**dadurch gekennzeichnet, dass**
Fördermittel zur aktiven Grenzschichtbeeinflussung durch Luftleitung innerhalb des Luftleitkanals (23) vorgesehen sind, so dass Luft sowohl vom Absaugbereich (21) zum Ausblasbereich (22) als auch in entgegen gesetzter Richtung transportiert werden kann.

13. Verfahren zur Steuerung der Leistung einer Windenergieanlage mit Rotorblättern mit einer Grenzschichtabsaugung nach einem der vorangehenden Ansprüche, wobei die Steuerung der Leistung in einem leistungsfreien Bereich, einem Anlaufbereich, einem Arbeitsbereich und einem Maximalleistungsbereich derart erfolgt,
dass
- im leistungsfreien Bereich und/oder im Maximalleistungsbereich keine Grenzschichtabsaugung,
- im Anlaufbereich eine maximal verfügbare Grenzschichtabsaugung und/oder
- im Arbeitsbereich eine variable Grenzschichtabsaugung, beginnend bei kleiner Leistung mit einer maximalen Grenzschichtabsaugung und endet mit einer minimalen Grenzschichtabsaugung bei großer Leistung erfolgt,
wobei die Steuerung der Leistung der Windenergieanlage über die Steuerung der Grenzschichtabsaugungsleistung erfolgt.

14. Verfahren zur Steuerung einer Windenergieanlage nach Anspruch 13,
**dadurch gekennzeichnet, dass**
bei Erreichen einer maximalen Windenergieanlagenleistung die Grenzschichtabsaugung deaktiviert wird.

## Claims

1. Rotor blade (1) of a wind turbine comprising a top side (13), a bottom side (14), a leading edge (16), a trailing edge (15), a hub fastening (17) for fastening the rotor blade (1) to the hub of the wind turbine, a blade tip (12) and a root region (11) from the hub fastening (17) as far as the maximum blade depth of the rotor blade (1),
wherein inside the rotor blade (1) there is provided a substantially radially outwardly running air-guiding channel (23) for guiding sucked-in air from a sucking-in region (21) arranged in the root region (11) to a blowing-out region (22) and a sucking-in of the boundary layer takes place,
wherein
the trailing edge (15) in the root region (11) is of blunt form at least in a section along the rotor blade (1),
wherein the root region (11) is formed as a Wortmann-like profile or as a Wortmann profile with a blunt, broad and/or truncated trailing edge (15)
and
the Wortmann-like profile or the Wortmann profile with a blunt, broad and/or truncated trailing edge (15) in the root region (11) merges in a flowing manner into the trailing edge (15) of the rotor blade (1),
wherein the profile with the blunt, broad and/or truncated trailing edge (15) begins with a boundary layer fence (28) or boundary layer ring in the root region (11) close to the hub fastening (17).

2. Rotor blade (1) according to Claim 1,
**characterised in that**
the leading edge (16) has a semicircular section in the root region (11).

3. Rotor blade (1) according to Claim 1 or 2,
**characterised in that**
the openings of the sucking-in region (21) and/or of the blowing-out region (22) are formed as bores (25, 27).

4. Rotor blade (1) according to Claim 1, 2 or 3,
**characterised in that**
the openings of the sucking-in region (21) are formed as bores (25, 27) and/or slits.

5. Rotor blade (1) according to Claim 1, 2, 3 or 4,
**characterised in that**
the openings of the sucking-in region (21) and/or of the blowing-out region (22) are formed as teeth (26), the teeth (26) being arranged close to the trailing edge.

6. Rotor blade (1) according to one of Claims 1 to 5,
**characterised in that**
the sucking-in region (21) is arranged at the trailing edge (15) and/or at the top side (13) of the root region (11).

7. Rotor blade (1) according to one of Claims 1 to 6,
**characterised in that**
the sucking-in region (21) is arranged at the top side (13) of the root region (11) close to the trailing edge (15).

8. Rotor blade (1) according to one of Claims 1 to 7,
**characterised in that**
the blowing-out region (22) is arranged in the blade tip (12).

9. Rotor blade (1) according to one of Claims 1 to 8,
**characterised in that**
the blowing-out region (22) is arranged at the top side (13) of the rotor blade, at the trailing edge (15) of the rotor blade (1) of the blade tip (12) and/or at a winglet (29) provided at the blade tip (12).

10. Rotor blade (1) according to one of Claims 1 to 9,
**characterised in that**
the blowing-out region (22) is arranged at a winglet (29) provided at the blade tip (12) and on the leeward side of the rotor blade (1).

11. Rotor blade (1) according to one of Claims 1 to 10,
**characterised in that**
a valve (24) for controlling the boundary layer influencing is arranged in the air-guiding channel (23).

12. Rotor blade (1) according to one of Claims 1 to 11,
**characterised in that**
conveying means for active boundary layer influencing by air guidance within the air-guiding channel (23) are provided, so that air can be transported both from the sucking-in region (21) to the blowing-out region (22) and in the opposite direction.

13. Method for controlling the power of a wind turbine having rotor blades with a sucking-in of the boundary layer according to one of the preceding claims, wherein the control of the power takes place in a power-free range, a start-up range, a working range and a maximum power range in such a way that
- in the power-free range and/or in the maximum power range no sucking-in of the boundary layer takes place,
- in the start-up range a maximum available sucking-in of the boundary layer takes place and/or
- in the working range a variable sucking-in of the boundary layer takes place, starting at a low power with a maximum sucking-in of the boundary layer and ends with a minimum sucking-in of the boundary layer at high power,
wherein the control of the power of the wind turbine takes place via the control of the power of the sucking-in of the boundary layer.

14. Method for controlling a wind turbine according to Claim 13,
**characterised in that**
on reaching a maximum wind turbine power the sucking-in of the boundary layer is deactivated.

## Revendications

1. Pale de rotor (1) d'une éolienne comprenant une face supérieure (13), une face inférieure (14), un bord avant (16), un bord arrière (15), une fixation de moyeu (17) permettant de fixer la pale de rotor (1) au moyeu de l'éolienne, une pointe de pale (12) et une base (11) allant de la fixation de moyeu (17) jusqu'au point de la pale de rotor (1) de profondeur maximale,
un canal de guidage d'air (23) étant ménagé à l'intérieur de la pale de rotor (1), lequel canal est destiné à guider l'air aspiré d'une zone d'aspiration (21) située dans la base (11) vers une zone d'échappement (22) et s'étend sensiblement radialement vers l'extérieur, et une aspiration de la couche limite étant réalisée,
le bord arrière (15) étant tronqué dans la base (11) au moins dans une partie le long de la pale de rotor (1), la base (11) étant réalisée sous la forme d'un profilé Wortmann ou de type Wortmann présentant un bord arrière (15) tronqué, large et/ou coupé
et
le profilé Wortmann ou du type Wortmann pourvu, dans la base (11), d'un bord arrière (15) tronqué, large et/ou coupé se prolongeant de manière continue dans le bord arrière (15) de la pale de rotor (1),
le profilé qui présente le bord arrière (15) tronqué, large et/ou coupé commençant par une barrière de couche limite (28) ou une bague de couche limite dans la base (11) à proximité de la fixation de moyeu (17).

2. Pale de rotor (1) selon la revendication 1, **caractérisée en ce que** le bord avant (16) présente dans la base une section semi-circulaire.

3. Pale de rotor (1) selon la revendication 1 ou 2, **caractérisée en ce que** les ouvertures de la zone d'aspiration (21) et/ou de la zone d'échappement (22) sont conçues sous la forme de trous (25, 27).

4. Pale de rotor (1) selon la revendication 1, 2 ou 3, **caractérisée en ce que** les ouvertures de la zone d'aspiration (21) sont conçues sous la forme de trou (25, 27) et/ou de fentes.

5. Pale de rotor (1) selon la revendication 1, 2, 3 ou 4, **caractérisée en ce que** les ouvertures de la zone d'aspiration (21) et/ou de la zone d'échappement (22) sont conçues sous la forme de crans (26), les crans (26) étant disposés à proximité du bord arrière.

6. Pale de rotor (1) selon l'une des revendications 1 à 5, **caractérisée en ce que** la zone d'aspiration (21) est située dans le bord arrière (15) et/ou dans la face supérieure (13) de la base (11).

7. Pale de rotor (1) selon l'une des revendications 1 à 6, **caractérisée en ce que** la zone d'aspiration (21) est disposée dans la face supérieure (13) de la base (11) à proximité du bord arrière (15).

8. Pale de rotor (1) selon l'une des revendications 1 à 7, **caractérisée en ce que** la zone d'échappement (22) est disposée dans la pointe de pale (12).

9. Pale de rotor (1) selon l'une des revendications 1 à 8, **caractérisée en ce que** la zone d'échappement (22) est disposée dans la face supérieure (13) de la pale de rotor, dans le bord arrière (15) de la pale de rotor (1) de la pointe de pale (12) et/ou dans une ailette de bout d'aile (29) prévue dans la pointe de pale (12).

10. Pale de rotor (1) selon l'une des revendications 1 à 9, **caractérisée en ce que** la zone d'échappement (22) est disposée dans une ailette de bout d'aile (29) prévue dans la pointe d'aile (12) et sur la face sous le vent de la pale de rotor (1).

11. Pale de rotor (1) selon l'une des revendications 1 à 10, **caractérisée en ce que** une valve (24) est placée dans le canal de guidage de l'air (23) pour piloter l'influence de la couche limite.

12. Pale de rotor (1) selon l'une des revendications 1 à 11, **caractérisée en ce que** des moyens de transport sont prévus pour influencer activement la couche limite en guidant l'air à l'intérieur du canal de guidage d'air (23) de sorte que l'air peut être transporté aussi bien depuis la zone d'aspiration (21) vers la zone d'échappement (22) que dans le sens opposé.

13. Procédé pour piloter la puissance d'une éolienne pourvue de pales de rotor présentant une aspiration de couche limite selon l'une des revendications précédentes, le pilotage de la puissance étant réalisé dans une plage sans puissance, une plage de mise en marche, une plage de travail et une plage de puissance maximale, de telle sorte
- que dans la plage sans puissance et/ou dans la plage de puissance maximale, il ne se produise aucune aspiration de couche limite,
- que dans la plage de mise en marche il se produise une aspiration de couche limite maximale disponible, et/ou
- que dans la plage de travail il se produise une aspiration de couche limite variable, commençant dans le cas d'une faible puissance par une aspiration de couche limite maximale et se terminant dans le cas d'une puissance élevée par une aspiration de couche limite minimale,
le pilotage de la puissance de l'éolienne étant réalisé par l'intermédiaire du pilotage de la puissance d'aspiration de couche limite.

14. Procédé pour piloter une éolienne selon la revendication 13, **caractérisé en ce que** lorsqu'une puissance maximum de l'éolienne est atteinte, l'aspiration de couche limite est désactivée.
